# EUROPÄISCHE PATENTSCHRIFT

(11) **EP 0 892 225 B1**
(45) Veröffentlichungstag und Bekanntmachung des Hinweises auf die Patenterteilung: **15.12.2004**
(21) Anmeldenummer: 98112577.6
(22) Anmeldetag: 07.07.1998
(51) Int. Cl.: F25B 17/08, F25B 39/00, F24F 5/00

(54) **Gerät der Klimatechnik sowie dessen Komponenten**
Air conditioning apparatus and its components
Appareil de conditionnement d'air et ses composants

(30) Priorität: 14.07.1997 DE 19730136
(43) Veröffentlichungstag der Anmeldung: 20.01.1999
(73) Patentinhaber: Dometic AG, 8500 Frauenfeld (CH)
(72) Erfinder: Ebbeson, Bengt, 8356 Ettenhausen (CH)
(74) Vertreter: Herrmann-Trentepohl, Werner, Dipl.-Ing.

(56) Entgegenhaltungen:
- DE-A- 3 016 290
- DE-A- 4 019 669
- DE-A- 4 438 084
- DE-A- 19 539 102
- FR-A- 2 698 098
- GB-A- 286 269
- US-A- 4 637 218

## Beschreibung

Die Erfindung betrifft eine Sorptionseinheit nach dem Oberbegriff des Anspruches 1 und ein Gerät der Klimatechnik, welches aus diesen Elementen gebildet wird, nach dem Oberbegriff des Anspruchs 20.

Aufgabe der Klimatisierung von Räumen ist einerseits die ständige Lufierneuerung und andererseits die Schaffung eines definierten Temperatur- und Klimazustandes, d.h. eine Regulierung der Lufttemperatur, der Luftfeuchtigkeit und/oder Filterung. Bei einer Klimatisierung im Sinne der vorliegenden Erfindung handelt es sich in erster Linie um eine Temperaturveränderung, sei es durch eine "Klimaanlage" zur Kühlung, eine Wärmepumpenanlage oder eine andere Anwendung.

Bei der Temperatur-Klimatisierung kommen derzeit beispielsweise Verfahren zum Einsatz, bei welchen durch Abkühlen eines Sorptionsteiles der Sorptionsvorgang eingeleitet wird und in einem Verdampfer ein Arbeitsmittel verdampft wird. Das Arbeitsmittel wird exotherm in einem Sorptionsmittel sorbiert und in einer anschließenden endothermen Reaktion (Regenerationsphase) wieder sorbiert.

Die zur Durchführung dieses Verfahrens verwendete Vorrichtung ist in der DE 42 33 062 beschrieben und besteht im wesentlichen aus mehreren langgestreckten Sorptionsbehältern (Kocheradsorberteil), die über einen Teil ihrer Länge mit als Sorptionsstoff dienendem Zeolith gefüllt sind und in diesem Teil einen Adsorber bilden. Der andere Teil der Länge bildet eine Kondensatorverdampferzone (Verdampfer). Die Sorptionsbehälter rotieren in zwei koaxialen Gehäusen auf einer Kreisbahn und befinden sich dabei mit dem Kocheradsorberteil in dem einen Gehäuse und mit dem Verdampferteil in dem anderen Gehäuse. Das die Kocheradsorberteile umschließende Gehäuse besitzt einen Zutritt und einen Auslaß für ein gasförmiges Wärmeträgermedium, so daß das Wärmeträgermedium auf seinem Strömungsweg durch das Gehäuse den Kocheradsorberteilen sowohl Wärme entzieht als auch Wärme zuführt.

Der Kocheradsorberteil weist im Querschnitt gekrümmte, langgestreckte, flache Hohlkörper auf, die aus einem ca. 0,1 mm starken Edelstahlblech hergestellt sind, wobei die Oberseite dieser Bleche glatt ist. An den Unterseiten sind wellenförmig gebogene Bleche angeordnet. Die Bleche sind an den Scheitellinien der Wellen durch Rollschweißnähte oder durch eine Laserbehandlung miteinander verbunden. Die ca. 600 mm langen und ca. 80 mm breiten Bleche sind mit Zeolith beschichtet, wobei die Zeolithschicht bei der Herstellung in einem Mehrschicht-Auftragungsverfahren aufgebracht wird. Die Bogen berühren das glatte Edelstahlblech und stützen es dadurch ab. Durch diese Form werden Kanäle gebildet, durch welche Wasserdampf geleitet wird.

Problematisch ist insbesondere die aufwendige Herstellung, welche sich daraus ergibt, daß zunächst das Blech entsprechend ausgeformt und mit Zeolith beschichtet werden muß, wobei dies in einer oder in mehreren Schichten erfolgen kann. Ein weiterer Nachteil ist darin zu sehen, daß die Zeolithschicht dünn aufgetragen werden muß, weil Zeolith kein guter Wärmeleiter ist und die Gaspermeabilität von Zeolith nicht sehr gut ist.

Das größte Problem ergibt sich allerdings daraus, daß die Verbindung zwischen dem Blech und dem Zeolith oftmals nicht beständig ist, weil das Stahlblech während der Rotation heiße und kalte Temperaturzonen durchläuft und infolgedessen ständig wechselnde Wärmedehnungen erfährt (beispielsweise in dem Fall, in dem die Bleche die Flügel eines Rotors bilden). Aus diesem Grund kann es vorkommen, daß sich im Betrieb Zeolithschichten lösen - entweder bereichsweise oder völlig - so daß die Beschichtung zerstört wird, sich die Kanäle zusetzen oder der Wärmeübergang ungleichmäßig erfolgt. An den Stellen, an denen die Zeolithschicht zerstört ist, wird auch die Funktion der Bleche bzw. des die Bleche aufweisenden Rotors verschlechtert.

Eine weitere Verschlechterung des Klimagerätes ergibt sich durch die Probleme im Verdampferbereich. Die gattungsgemäßen Verdampfer - sowie auch der temperaturisolierende Bereich zwischen Verdampfer und Sorptionszone (Puffervorrichtung genannt) - weisen das Problem auf, daß nicht genügend verhindert wird, daß auch größere Wassertröpfchen bei der Adsorption des Wassers im Zeolith vom Verdampfer in die Sorptionseinheit mitgerissen werden, so daß dann Wassertröpfchen direkt in den Zeolithanteil eintreten könnten. Dies verschlechtert den Wirkungsgrad der Klimaanlage, da die Wassertröpfchen keine Wärme aus dem den Verdampfer umgebenden Raum aufgenommen haben.

Die DE 30 16 290 A offenbart ein Sorbens mit einer gasdurchlässigen Hülle für den Durchgang einer vom Sorbens zu sorbierenden und desorbierenden Substanz.

Die Erfindung zielt daher darauf ab, das gattungsgemäße Klimagerät sowie dessen Komponenten derart weiterzuentwickeln, daß sich eine einfache und kostengünstige Herstellung ergibt, wobei die Funktion des Gerätes und seiner Komponenten auch nach längerem Betrieb noch gewährleistet sein soll.

Die Erfindung erreicht dieses Ziel im Hinblick auf die Komponenten Sorptionseinheit, nach Anspruch 1 und im Hinblick auf das Gerät durch den Gegenstand des Anspruches 20.

Vorteilhafte Ausgestaltungen der Erfindung sind den Unteransprüchen zu entnehmen.

Die Erfindung schafft eine Sorptionseinheit für Klima- und Wärmetechnikgeräte mit Blechen zur Wärmeabgabe, an denen ein Arbeitsmedium vorbeigeleitet wird, wobei die Bleche mit einem Sorptionsmittel in Kontakt stehen, welches strangartige Profilkörper bildet, die derart ausgestaltet sind, daß sie einen flächigen Kontakt zu den Blechen aufweisen und daß mittels der strangartigen Profilkörper Kanäle zur Durchleitung des Arbeitsmediums gebildet werden. Als Sorptionsmittel kann z.B. Zeolith und als Arbeitsmedium Wasser verwendet werden, welches in einem Verdampfer verdampft und in dem Zeolith adsorbiert wird. Anstelle der Stoffpaarung Wasser/Zeolith sind auch andere an sich bekannte Paarungen verwendbar, wie z.B. Ammoniak/Kohlenstoff, Wasser/Salz.

In einer Ausführungsform der Erfindung bilden sich die Kanäle zur Durchleitung des Arbeitsmediums zwischen nebeneinander angeordneten Profilkörpern. Bevorzugt weisen dabei die Profilkörper zumindest weitgehend die Form eines Doppel-T oder eines X mit geschlossener Ober- und Unterseite auf, um eine möglichst große Berührungsfläche zu bilden. Diese Körper werden dann dazu verwendet, den Zwischenraum zwischen Doppelblechen auszufüllen. Die Profilstücke können ferner bevorzugt parallel zueinander angeordnet werden und können eine unterschiedliche Länge aufweisen.

Mit dieser Ausführungsform der Erfindung bilden sich zwischen den Doppelblechen Bereiche neben- und hintereinanderliegender Profilstücke (z.B. Zeolith), wobei sich im Einschnürungsbereich aneinanderliegender Doppel-T-Stücke oder der X-Stücke jeweils ohne weiteres Kanäle für das durchströmende Arbeitsmedium (Wasser-) Dampf ausbilden.

Die Doppel-T oder X-Stücke sind ferner so ausgelegt, daß sich ein großflächiger Kontaktbereich zu den Blechen ergibt, wodurch an diesen Stellen ein guter Wärmeübergang erfolgt. Da Zeolith eine relativ schlechte Wärmeleitfähigkeit besitzt, wird der innen liegende Bereich zwar weniger erwärmt, dieser Effekt ist jedoch aufgrund der Einschnürung unbedeutend.

In einer weiteren Ausführungsform sind die Kanäle zur Durchleitung des Arbeitsmediums in den Profilkörpern ausgebildet und verlaufen in Längsrichtung der Profilkörper. Dabei sind die Profilkörper ebenfalls so ausgelegt, daß sich ein großer Kontaktbereich zu den Blechen ergibt. Bevorzugt haben die Profilkörper eine quadratische Querschnittsform, wobei die Kanäle in den Körpern bevorzugt achssymmetrisch bezüglich der Längsrichtung der Profilkörper angeordnet sind und einen kreisförmigen oder quadratischen Querschnitt oder einen quadratischen Querschnitt mit abgerundeten Ecken aufweisen. Vorzugsweise befindet sich in jedem Profilkörper jeweils ein Kanal entlang der Längsachse im Zentrum des Querschnitts des Körpers. Jedoch kann ein Profilkörper auch zwei, drei oder mehrere nebeneinander liegende Abschnitte mit quadratischer Querschnittsform aufweisen, wobei sich in jedem dieser Abschnitte jeweils ein Kanal entlang der Längsachse des Körpers, vorzugsweise im Zentrum des Querschnitts des Abschnitts, befindet. Wie bei der vorher beschriebenen Ausführungsform können die Profilkörper bevorzugt parallel zueinander angeordnet werden und eine unterschiedliche Länge aufweisen. Die gerade beschriebene Ausführungsform hat dabei den Vorteil, daß beim Einsetzen der Profilkörper zwischen die Bleche der Sorptionseinheit aufgrund der Symmetrie der Profilkörper nicht darauf geachtet weden muß, welche Seiten des Körpers die Bleche berühren. Dadurch wird der Einbau der Profilkörper erleichtert.

Da die Stirnseiten der Profilstücke nach einer weiteren Variante der Erfindung nicht eben (beispielsweise gebrochen) sind, liegen sie nicht dichtend nebeneinander, so daß Öffnungen bzw. Verbindungen zwischen den Kanälen gebildet werden, die für einen problemlosen Druckausgleich zwischen den Kanälen sorgen.

Nach einer weiteren besonders bevorzugten Variante der Erfindung ergänzen sich eine Mehrzahl an Doppelblechelementen zu einem über- und/oder nebeneinanderliegenden Sorber-/Kondensator- Verdampferpaket, welches auf einfachste Weise durch entsprechende Geometriegebung und Kombination von Gerätekomponenten an verschiedenste Einsatzzwecke anpassen läßt. Beispielsweise ist die Kondensatorleistung durch entsprechende Zusatzelemente bzw. Zusatzdoppelblechschichten unkompliziert erhöhbar.

Die Kondensator-Verdampfereinheit und die Sorptionseinheit können quasi übereinander in einer Art Kompaktgerät angeordnet. Die Einheiten sind dabei schichtartig aufgebaut, so daß beispielsweise bis zu 100 "Klimaelemente", die jeweils einen eigenen Sorptions- und Kondensator-/Verdampfer-abschnitt umfassen, das komplette Klimagerät bilden. In diesem Fall liegt bevorzugt zwischen dem Teil der Sorptionseinheit, in welchem die Zeolithketten angeordnet sind und dem Kondensator-/Verdampferteil eine Pufferzone bzw. eine Puffervorrichtung, die verhindert, daß im Zeolithteil abgegebene Wärme zum Verdampfer gelangt (sofern der Verdampfer der Kälteerzeugung dient).

Diese Pufferzone Kann mit einer Wasserabscheidevorrichtung versehen werden, die vorzugsweise einen Aufbau aus einer Mehrzahl an parallel zueinander angeordneten Blechen hat, die jeweils beidseitig mit Einprägungen versehen sind, die als Abstandshalter zum jeweils benachbarten Blech und/oder als Auffangausnehmungen für Flüssigkeitströpfchen dienen. Diese Wasserabscheidevorrichtung ist insbesondere deshalb vorteilhaft, weil infolge des sehr starken Kochvorganges in der Verdampfungsphase aufgrund der Vakuumwirkung des Verdampfers zu große Flüssigkeitströpfchen mit dem in die Sorptionseinheit einströmenden Dampf mitgerissen werden können, welche in den Zeolithabschnitt der Sorptionseinheit eintreten und damit die Leistung des Klimagerätes herabsetzen. Dies verhindert der Wasserabscheider auf einfache Weise dadurch, daß der Wasserabscheider die Wassertröpfchen quasi "abfangt" und in den Verdampfer zurückleitet. Dabei wird die Wasserabscheidewirkung derart bemessen (durch entsprechende Auslegung der Einprägungen), daß die Leistung des Gerätes nicht weiter herabgesetzt wird, denn das Durchströmen des Wasserdampfes zur Sorptionseinheit soll an sich nicht negativ beeinflußt werden. Lediglich das Abfangen größerer Wassertropfen ist erwünscht. Die Einprägungen sind in diesem Bereich der Pufferzone auch nach oben gekrümmt, bzw. weisen an den seitlichen Randbereichen nach unten, damit die aufwirbelnden Wassertröpfchen abgefangen und nach unten in den Verdampfer zurückgeleitet werden. Andererseits soll in der Regenerationsphase der Sorptionseinheit ausgetriebener Wasserdampf an den Einprägungen auskondensieren und nach unten in die Kondensator/Verdampfereinheit abfließen können.

Aus den Komponenten Sorptionseinheit, Pufferzone und Kondensator/Verdampfereinheit läßt sich auf einfache Weise ein kompaktes, gut funktionierendes Gerät der Klimatechnik, insbesondere ein Kühlgerät oder eine Wärmepumpe, zusammenstellen.

Nachfolgend wird die Erfindung unter Bezug auf die Zeichnung anhand von Ausführungsbeispielen näher beschrieben. Es zeigen:
- Fig. 1: einen Abschnitt einer erfindungsgemäßen Sorptionseinheit;
- Fig. 2: einen Abschnitt eines weiteren Ausführungsbeispiels einer erfindungsgemäßen Sorptionseinheit;
- Fig. 3: einen weiteren Abschnitt des Ausführungsbeispiels aus Fig. 1;
- Fig. 4: einen Schnitt X-X' aus Fig. 3;
- Fig. 5: ein Ausführungsbeispiel eines Abschnittes einer Kondensator/Verdampfereinheit und einer Puffervorrichtung in einer Draufsicht;
- Fig. 6: eine räumliche Ansicht des Abschnittes der Fig. 5;
- Fig. 7: einen Schnitt A-A' aus Fig. 5;
- Fig. 8: eine Ansicht einer "Schicht" eines erfindungsgemäßen Klimagerätes;
- Fig. 9: eine Seitenansicht des Ausführungsbeispieles nach Fig. 8;
- Fig. 10 bis 13: schematische Querschnittsdarstellungen von weiteren Ausführungsbeispielen einer Kondensator/Ver-dampfereinheit, und
- Fig. 14: eine Detailansicht der Schnittansicht gemäß Fig. 13 in perspektivischer und vergrößerter Darstellung.

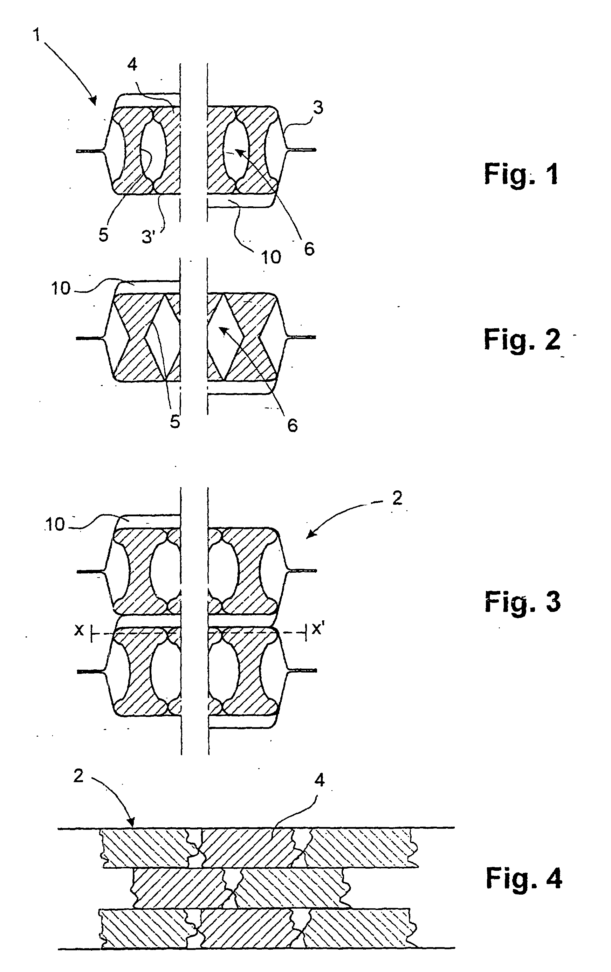

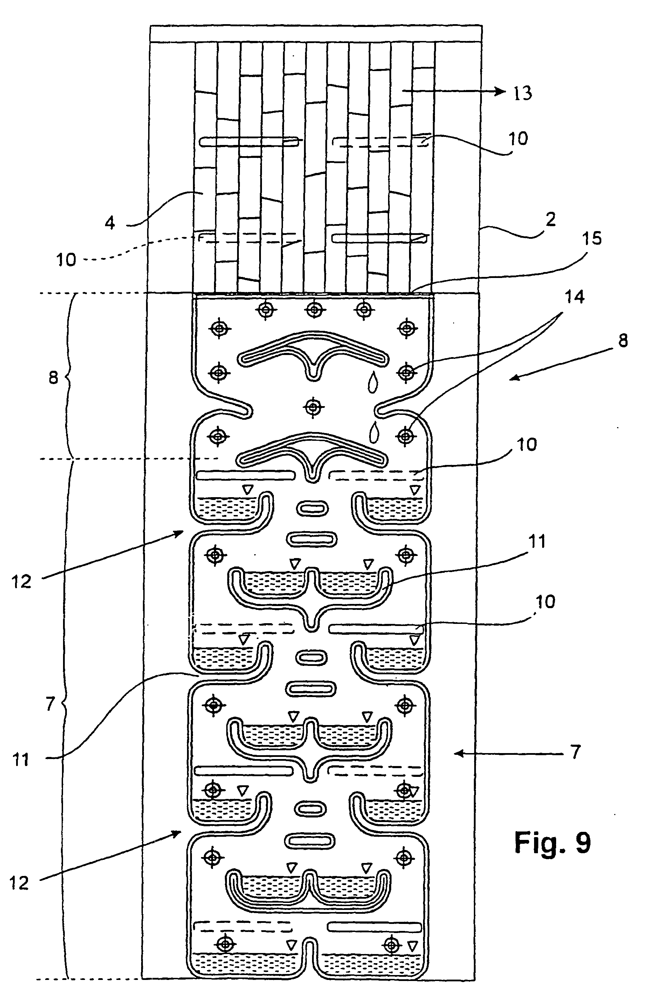

Fig. 1 zeigt einen Abschnitt 1 einer Sorptionseinheit 2 eines Gerätes für Klimaund Wärmetechnik gemäß Fig.9, mit Blechen zur Wärmeabgabe, an denen Wasserdampf vorbeigeleitet wird. Die Bleche sind als Doppelbleche mit Blechwänden 3 und 3' ausgebildet, welche an ihren Enden miteinander verbunden (z.B. verschweißt) sind. In den von den Blechen 3 und 3' gebildeten Hohlkammern sind strangartige Zeolith-Profilkörper 4 angeordnet. Diese weisen eine Doppel-T-Form auf, wobei die Ober- und Unterseiten des Doppel-T im flächigen Kontakt mit den Blechen 3 und 3' stehen. Bei der Ausführungsform der Fig. 2 gilt entsprechendes für eine "X-förmige" Ausbildung der Zeolithkörper 4, wobei die Oberseiten bzw. Unterseiten der X-Körper geschlossen ausgebildet sind, um eine möglichst große Berührungsfläche zu bilden.

Die nebeneinanderliegenden X-Körper oder Doppel-T-Körper bilden im Bereich ihrer Einschnürungen 5 jeweils Kanäle 6 aus, durch welche der Dampf strömen kann. Bei der Herstellung der Elemente 1 (welche natürlich nicht nur drei oder vier, sondern eine Vielzahl an Zeolithreihen aufweisen sollten), wird lediglich dafür gesorgt, daß "Bruchstücke" parallel zueinander liegen.

Wie in Fig. 3 zu erkennen ist, lassen sich auf einfache Weise mehrere Doppelblechelemente zu einem Paket von über- und/oder nebeneinanderliegenden Sorptionseinheiten zusammenstellen.

Ein wesentlicher Vorteil dieses schichtartig aüfgebauten Paketes aus Sorptionseinheiten ist darin zu sehen, daß eine aufwendige Zeolithbeschichtung der Bleche 3 und 3' nicht erforderlich ist. Die Zeolithstücke werden einfach in den jeweiligen Blechhohlraum eingelegt und aneinandergeschoben.

In der Sorptionseinheit bzw. im gesamten Klimagerät wird vorzugsweise ein Druck aufrecht erhalten, der unter dem Atmosphärendruck liegt. Damit drückt der Außendruck die verhältnismäßig dünnen Bleche 3 und 3' gegeneinander, und die Zeolithkörper werden an die Bleche 3 und 3' gepreßt und in ihrer Position gehalten.

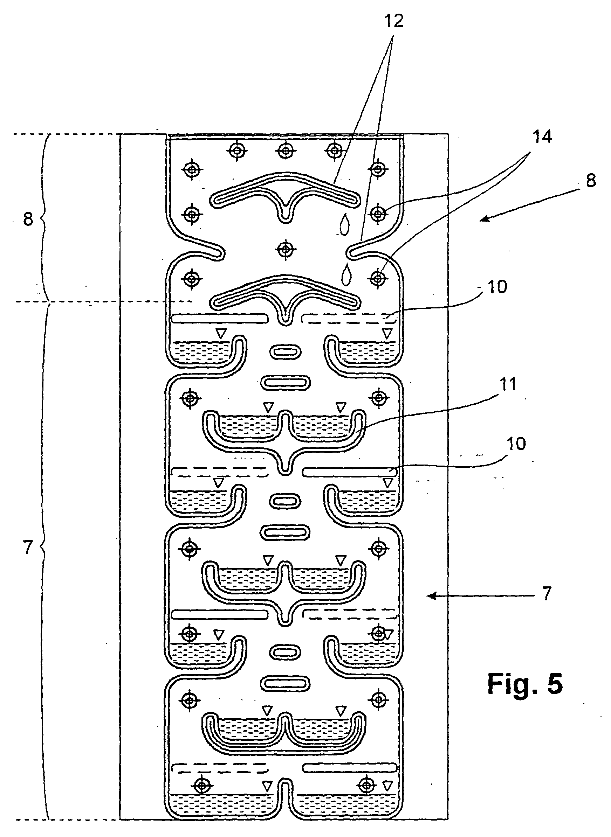

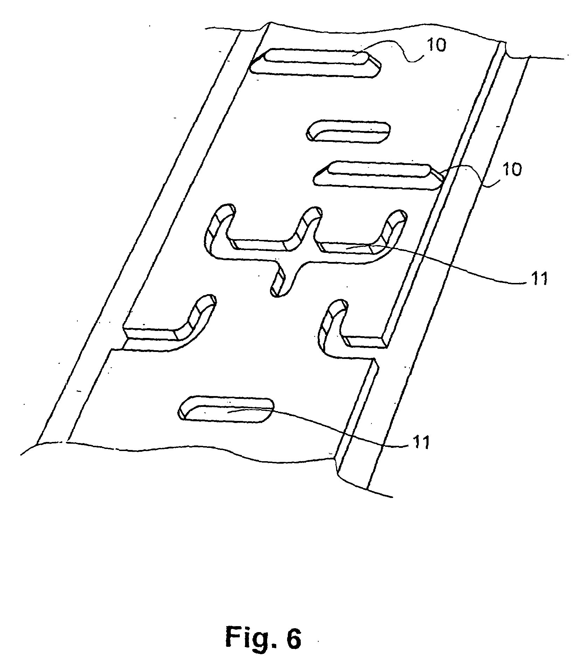

Fig. 5, 6 und 7 zeigen eine Kondensator/Verdampfereinheit 7 und einen Pufferabschnitt oder Puffervorrichtung 8. Oberhalb der Puffervorrichtung 8 ist der Durchgang zur sich nach oben anschließenden Sorptionseinheit durch Blecheinprägungen 15 etwas eingeschnürt. Dadurch wird verhindert, daß die Profilkörper bei senkrechter Ausrichtung der Sorptionseinheit 2 in die Puffervorrichtung 8 nach unten fallen können.

Die Gerätekomponenten Sorptionseinheit 2, Puffervorrichtung 8 und Kondensator/Verdampfereinheit 7 (s. Fig 9) sind als Blechpaket ausgebildet, wobei jeweils Bleche 9a, 9b, 9c usw. parallel zueinander liegen, welche beidseitig mit Ausprägungen 10 und Einprägungen 11, 14 versehen sind. Diese Ausprägungen 10 und Einprägungen 11, 14 sind derart angeordnet, daß sie eine kombinierte Wirkung als "Durchströmlabyrinth", als "Wassersammelbecken" und als mechanische "Abstandshalter" der Bleche 9a, 9b usw. entfalten. Damit werden eine Kondensator/Verdampfereinheit 7 und ein Pufferabschnitt 8 geschaffen, welche auf überraschend einfache Weise aufgebaut und dennoch höchst wirkungsvoll sind. Bei praktischen Ausführungen liegen beispielsweise zwischen fünfzig und hundert Bleche 9 nebeneinander, je nachdem, welche Kühlleistung gewünscht ist.

Damit bildet sich im Bereich der Puffervorrichtung - Klimatrenner - zwischen der Sorptionseinheit 2 und der Kondensator/Verdampfereinheit 7 jeweils eine Wasserabscheidungsvorrichtung 12 für Wassertropfen des zur Sorptionseinheit strömenden Wasserdampfes, welche mit dem Wasserdampf mitgerissen werden oder bei dem Kochprozeß nach oben fliegen, so daß sie nicht in die Sorptionseinheit 2 gelangen, was sonst zu einer Verringerung des Wirkungsgrades des Klimagerätes führen würde. Bzw. dienen die Einprägungen als Auffangschalen von kondensierendem Wasserdampf in der Regenerationsphase der Sorptionsvorrichtung. Die Einprägungen 11 sind deshalb auch in der Pufferzone 8 nach unten gekrümmt, um die Wassertröpfchen aufzuhalten und nach unten abzuleiten, während sie in der Kondensator/Verdampfereinheit 7 nach oben gekrümmt sind, um als Auffangschalen zu dienen, so daß das auskondensierte Wasser gleichmäßig in der Kondensator/Verdampfereinheit verteilt wird und sich nicht nur im unteren Bereich ansammelt.

Wie aus den Fig. 5, 6 und 9 zu entnehmen ist, können die Ausprägungen 10 jeweils über die Hälfte der Sorptionseinheit 2 bzw. der Kondensator/Verdampfereinheit 7 vorzugsweise wechselseitig angeordnet sein und ergänzen sich mit den Ausprägungen 10 einer zweiten Sorptionseinheit bzw. Kondensator/Verdampfereinheit, die auf die erste Sorptionseinheit bzw. Kondensator/Verdampfereinheit aufgelegt ist, um ein Paket zu bilden. Diese Ausprägungen 10 dienen dabei in ihrer gegenseitigen Ergänzung als durchgehende Abstandshalter über die gesamte Breite der Einheiten und bilden auf diese Weise bei einem Klimagerät zusätzlich Strömungskanäle zur Durchleitung einer Raumluftströmung, welcher im Bereich des Verdampfers 7 Wärme entzogen wird, bzw im Bereich der Sorptionseinheit 2 zur Aufnahme von Wärme aus dem exothermen Prozeß. Dagegen dient die Luftströmung in der Regenerationsphase des Klimagerätes im Bereich der Sorptionseinheit 2 zur Abgabe von Wärme an das Zeolith und zum Kühlen bei der Kondensation des Wassers in der Kondensator/Verdampfereinheit 7.

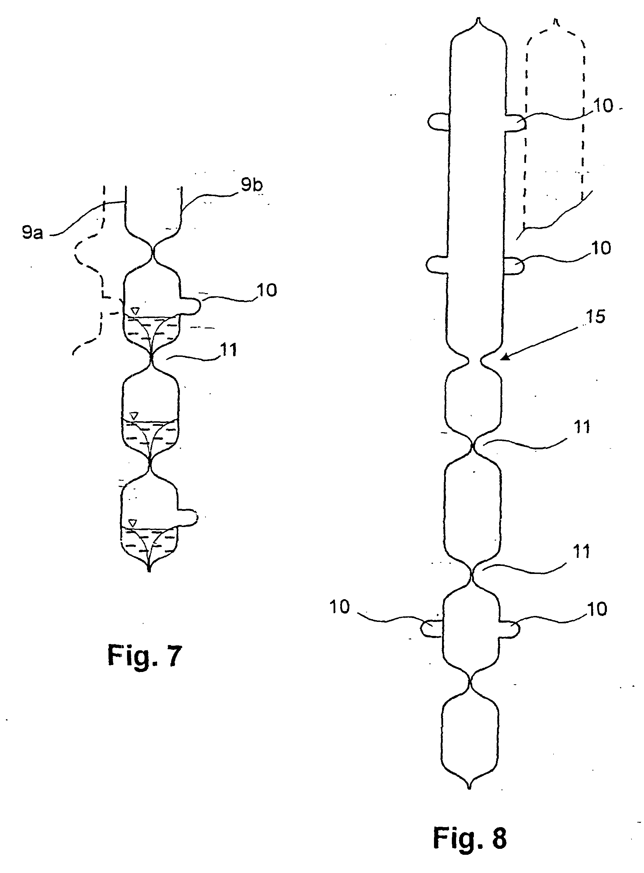

Wie ferner aus Fig. 7 zu entnehmen ist, berühren sich die Einprägungen 11, die sich von beiden Seiten in den Verdampfer 7 hinein erstrecken, und dienen auf diese Weise als Abstützung der beiden Bleche gegeneinander.

Die Einprägungen 11 sind im unteren Bereich gerade und im Bereich ihrer Ränder bogenförmig gekrümmt, und ihr Abstand vergrößert sich zur Sorptionseinheit 2 hin, um die Wasserabscheidewirkung infolge des größer werdenden Dampfstromes zur Sorptionseinheit 2 hin zu erhöhen.

Die als Abstandshalter dienenden Einprägungen 11 können im oberen Bereich des Verdampfers 7 eine etwas stärkere Krümmung aufweisen, so daß die aufgefangene Wassermenge dort größer ist als im unteren Bereich des Verdampfers 7, wo sich das Wasserkondensat normalerweise ansammelt. Auf diese Weise wird vorteilhaft erreicht, daß beim Kochvorgang eine möglichst gleichmäßige Verteilung des verdampfenden Wassers über den gesamten Verdampferquerschnitt der Kondensator/Verdampfereinheit 7erfolgt. An ihrer Unterseite können sie finnenartige Leitflossen aufweisen, die dafür sorgen, daß das Wasser selbst bei einer Neigung des Klimagerätes (falls es z.B. in einem Caravan angeordnet ist, der auf einer abschüssigen Straße fährt oder der Verzögerungs bzw. Beschleunigungsvorgängen ausgesetzt ist) nach unten abgeleitet wird.

Zur Verbesserung der Wasserverteilung in der Kondensator/Verdampfereinheit kann die Oberseite der Bleche mechanisch und/oder chemisch aufgerauht sein.

Fig. 9 veranschaulicht, wie aus einer erfindungsgemäßen Sorptionseinheit 2, einer erfindungsgemäßen Kondensator/Verdampfereinheit 7 und einem erfindungsgemäßen Pufferabschnitt 8 ein "schichtartiges" und kompaktes, aus einzelnen Speicherelementen bestehendes Klimagerät gebildet werden kann. Dabei werden die einzelnen Speicherelemente aufeinandergelegt, wobei die Oberflächen durch die als Ausprägungen dienenden Abstandshalter 10 auf Abstand gehalten werden. Die durch die Abstandshalter gebildeten Querkanäle dienen zur Durchleitung von Luft (siehe Pfeil 13 in Fig. 9). Die Kanäle besitzen einen i.w. konstanten Querschnitt, so daß eine gleichmäßige Luftströmung erzeugt wird und die Luft im Verdampferbereich gleichmäßig abgekühlt werden kann. Andererseits wird die bei der exothermen Reaktion im Kondensatorbereich der Sorptionseinheit 2 entstehende Wärme durch den Luftstrom gut abgeführt.

Die Kondensator/Verdampfereinheit 7 und Sorptionseinheit 2 können, wie in der Fig. 9 gezeigt, durch den Pufferabschnitt 8 unmittelbar verbunden sein. Es ist aber auch denkbar, daß die Kondensator/Verdampfereinheit 7 und Sorptionseinheit 2 über eine längere Rohrleitung in Verbindung stehen, wobei diese Rohrleitung selbst als Kondensator ausgebildet sein kann, indem auf ihrer Außenseite entsprechende Kühlrippen angeordnet sind, so daß der in der Austreibungsphase, bei welcher das im Zeolith enthaltene Wasser durch Wärmezufuhr ausgetrieben und die Sorptionseinheit 2 regeneriert wird, erzeugte Wasserdampf im Bereich der Rohrleitung auskondensiert wird und als Wasser in den Verdampfer 7 zurückgelangt. In dieser Rohrleitung könnte auch ein Ventil angeordnet sein, mit welchem die Verbindung zwischen dem Verdampfer 7 und der Sorptionseinheit 2 vorübergehend verschlossen wird und erst dann geöffnet wird, wenn Kälteleistung angefordert wird.

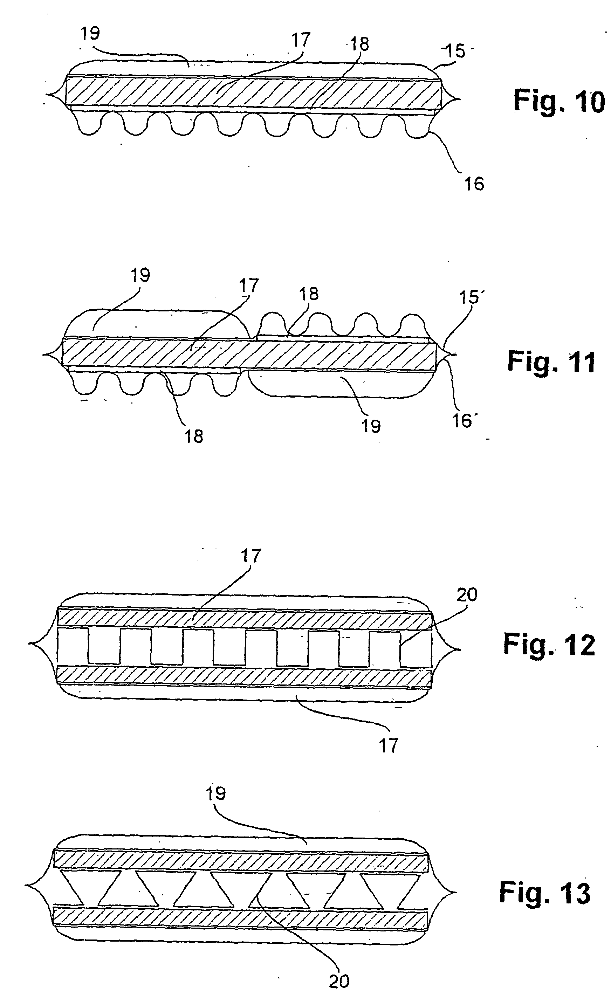

Alternative Ausführungsbeispiele für die erfindungsgemäße Kondensator/Verdampfereinheit ergeben sich aus den Fig. 10 bis 14. Der Hohlkörper der Kondensator/Verdampfereinheit besteht aus zwei randseitig z. B. durch Rollschweißen miteinander verbundenen Blechhalbschalen 15, 16, zwischen denen eine Einlage 17 aus stark hygroskopischem Material aufgenommen ist. Da diese Einlage aus Glasfasermaterial oder Filzmaterial ist, wird zur Vermeidung des Auflösens der Faserstruktur infolge mechanischer Beanspruchung eine Stützstruktur 18 vorgesehen, die von einem Siebblech gebildet ist. An der Oberseite besitzt die Blechschale 15 rippenartige Ausprägungen 19, welche als Abstandshalter für eine weitere Kondensator/Verdampfereinheit dienen.

Die in der Fig. 11 dargestellte Kondensator/Verdampfereinheit ist ähnlich wie das vorige Ausführungsbeispiel ausgebildet, jedoch sind an beiden Seiten der Einlage 17 Siebbleche 18 vorgesehen, wobei sich die Siebbleche jeweils nur über den wellenförmigen Bereich der jeweiligen Blechhalbschale erstrecken, da die gegenüberliegende Seite der Einlage von der Blechhalbschale selbst abgedeckt - wird. Darüber hinaus sind die Abstandshalter 19 in ihrer Längserstreckung verkürzt, jedoch wechselseitig auf der Oberfläche der jeweiligen Blechhalbschale 15' bzw. 16' angeordnet. Die wellenförmigen Bereiche der Blechhalbschalen bilden sich in Längsrichtung erstreckende Kanäle, durch welche der Wasserdampf hindurchströmt.

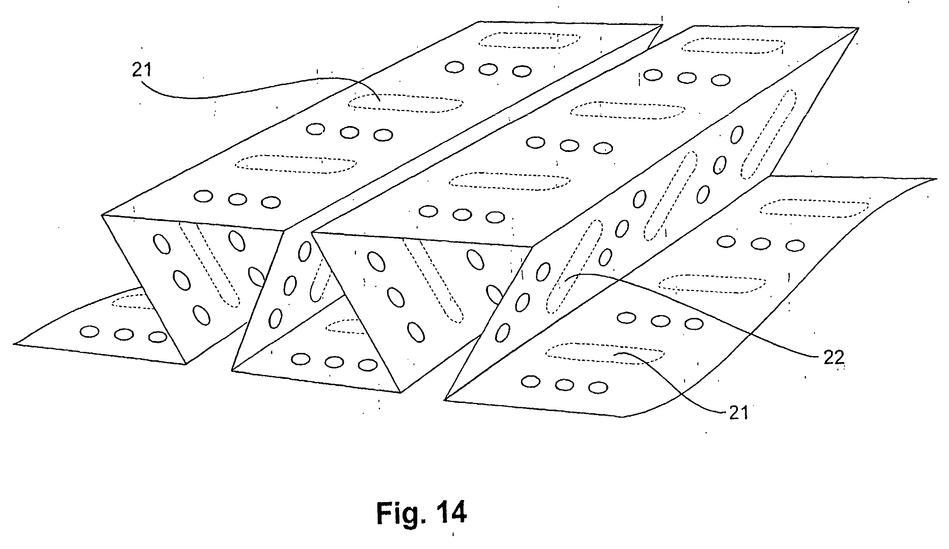

Bei dem Ausführungsbeispiel gemäß Fig. 12 sind zwei Einlagen 17 vorgesehen, die mittels eines Abstandshalters 20 auf Abstand gehalten werden. Der Abstandshalter 20 kann ebenfalls aus einem Siebblech bestehen, welches im wesentlichen meanderförmig gebogen ist. Das Blech kann auch zickzackförmig gebogen sein, wie dies in dem Ausführungsbeispiel gemäß Fig. 13 gezeigt ist, wobei im Stegbereich und in den jeweiligen Auflageflächen Ein- bzw. Ausprägungen 21, 22 vorgesehen sind. Diese Ein- bzw. Ausprägungen dienen zur Stabilisierung des relativ dünnwandigen Blechs. Vorteilhaft ist es, wenn die Ausprägungen nicht im Bereich der Auflageflächen der Einlagen angeordnet sind, da vermieden werden soll, daß die Einlagen an diesen Stellen verdichtet werden. Vielmehr erstrecken sich die Ausprägungen dann in den Zwischenraum zwischen den Einlagen oder im Auflagebereich zu der von der Einlage abgewandten Richtung.

Natürlich können zur Verbesserung der Wasseraufnahmefähigkeit sämtliche Bleche und Stützstrukturen oberflächenbehandelt sein, wobei dies mechanisch und/oder chemisch im Sinne einer Aufrauhung erfolgen kann. Werden die Siebbleche ferner z. B. aus Kupfer hergestellt, so wird die Wärmeleitfähigkeit wesentlich verbessert, so daß die in der Längsrichtung verlaufenden Rillen auch als Wärmeträger funktionieren.

## Patentansprüche

1. Sorptionseinheit für Klima- und Wärmetechnikgeräte mit Blechen (3, 3') zur Wärmeleitung, an denen ein Arbeitsmedium vorbeigeführt wird, wobei die Bleche mit einem Sorptionsmittel in Kontakt stehen,
**dadurch gekennzeichnet, daß**
das Sorptionsmittel strangartige Profilkörper (4) bildet, welche derart ausgestaltet sind, daß mit ihnen ein flächiger Kontakt zu den Blechen (3, 3') besteht und daß mittels der strangartigen Profilkörper (4) Kanäle (6) zur Durchleitung des Arbeitsmediums gebildet werden.

2. Sorptionseinheit nach Anspruch 1, **dadurch gekennzeichnet, daß** das Arbeitsmedium Wasser ist und das Sorptionsmittel ein Mineral, insbesondere Zeolith, ist.

3. Sorptionseinheit nach Anspruch 1, **dadurch gekennzeichnet, daß** das Arbeitsmedium Wasser ist und das Sorptionsmittel ein Salz ist.

4. Sorptionseinheit nach Anspruch 1, **dadurch gekennzeichnet, daß** das Arbeitsmedium Ammoniak ist und das Sorptionsmittel Kohlenstoff.

5. Sorptionseinheit nach einem der vorhergehenden Ansprüche, **dadurch gekennzeichnet, daß** die Kanäle zur Durchleitung des Arbeitsmediums in den Profilkörpern ausgebildet sind und in Längsrichtung der Profilkörper verlaufen.

6. Sorptionseinheit nach Anspruch 5, **dadurch gekennzeichnet, daß** die Kanäle zur Durchleitung des Arbeitsmediums achsymmetrisch bezüglich der Längsrichtung der Profilkörper angeordnet sind.

7. Sorptionseinheit nach Anspruch 6, **dadurch gekennzeichnet, daß** die Kanäle zur Durchleitung des Arbeitsmediums einen kreisförmigen Querschnitt aufweisen.

8. Sorptionseinheit nach Anspruch 6, **dadurch gekennzeichnet, daß** die Kanäle zur Durchleitung des Arbeitsmediums einen quadratischen Querschnitt aufweisen.

9. Sorptionseinheit nach Anspruch 6, **dadurch gekennzeichnet, daß** die Kanäle zur Durchleitung des Arbeitsmediums einen quadratischen Querschnitt mit abgerundeten Ecken aufweisen.

10. Sorptionseinheit nach einem der Ansprüche 5 bis 9, **dadurch gekennzeichnet, daß** in jedem Profilkörper jeweils ein Kanal zur Durchleitung des Arbeitsmediums im Zentrum des Querschnitts des Körpers angeordnet ist.

11. Sorptionseinheit nach einem der Ansprüche 5 bis 10, **dadurch gekennzeichnet, daß** der Profilkörper einen quadratischen Querschnitt aufweist.

12. Sportionseinheit nach Anspruch 5, **dadurch gekennzeichnet, daß** der Profilkörper zwei, drei oder mehrere nebeneinander liegende Abschnitte umfaßt, wobei jeder Abschnitt einen Profilkörper nach Anspruch 11 darstellt.

13. Sorptionseinheit nach Anspruch 1, **dadurch gekennzeichnet, daß** sich die Kanäle (6) zur Durchleitung des Arbeitsmediums zwischen nebeneinander angeordneten Profilkörpern (4) bilden.

14. Sorptionseinheit nach Anspruch 13, **dadurch gekennzeichnet, daß** die Profilkörper (4) zumindest weitgehend die Form eines Doppel-T aufweisen.

15. Sorptionseinheit nach Anspruch 13, **dadurch gekennzeichnet, daß** die Profilkörper (4) zumindest weitgehend die Form eines X mit geschlossenen Ober- und Unterseiten aufweisen.

16. Sorptionseinheit nach einem der vorhergehenden Ansprüche, **dadurch gekennzeichnet, daß** die Bleche (3, 3') als Doppelblech-Elemente ausgebildet sind, wobei der Zwischenraum zwischen den Doppelblechen mit den strangartigen Profilkörpern ausgefüllt (4) ist.

17. Sorptionseinheit nach einem der vorhergehenden Ansprüche, **dadurch gekennzeichnet, daß** die strangartigen Profilkörper (4) eine unterschiedliche Länge aufweisen und parallel zueinander angeordnet sind.

18. Sorptionseinheit nach einem der Ansprüche 16 oder 17, **dadurch gekennzeichnet, daß** eine Mehrzahl an Doppelblechelementen ein über- und/oder nebeneinanderliegendes Paket bilden.

19. Sorptionseinheit nach einem der vorhergehenden Ansprüche, **dadurch gekennzeichnet, daß** die Enden der strangartigen Profilkörper (4) derart ausgebildet sind, daß sich zwischen aneinandergrenzenden Enden der Profilkörper (4) Öffnungen ausbilden, durch welche ebenfalls Arbeitsmedium strömen kann.

20. Gerät der Klimatechnik, insbesondere Kühlgerät oder Wärmepumpe, **gekennzeichnet durch** eine Sorptionseinheit (2) nach einem der Ansprüche 1 bis 19, umfassend eine Kondensator/Verdampfereinheit (7) und eine Puffervorrichtung (8).

21. Gerät der Klimatechnik nach Anspruch 20, **dadurch gekennzeichnet, daß** in der Sorptionseinheit (2) und/oder der Puffervorrichtung (8) und/oder der Kondensator/Verdampfereinheit (7) in den Blechwandungen Ausprägungen (10) vorgesehen sind; welche bei Aufeinanderlage der Gerätekomponenten (2, 7, 8) Querkanäle begrenzen, durch welche eine Luftströmung o.dgl. (13) erzeugbar ist.

22. Gerät der Klimatechnik nach Anspruch 21, **dadurch gekennzeichnet, daß** sich die Ausprägungen (10) jeweils wechselweitig über einen Teil der Breite der Sorptionseinheit (2) und/oder der Puffervorrichtung (8) und/oder der Kondensator/Verdampfereinheit (7) erstrecken und auf beiden Oberflächen der Gerätekomponenten angeordnet sind.

23. Gerät der Klimatechnik nach einem der Ansprüche 20 bis 22 folgende, **dadurch gekennzeichnet, daß** im Innenraum des Gerätes während des Betriebes ein Druck besteht, der niedriger ist als der Luftdruck.

24. Gerät der Klimatechnik nach einem der Ansprüche 20 bis 23 folgende, **dadurch gekennzeichnet, daß** die Blechwandungen (3, 3') an der Innenseite der Puffervorrichtung (8) und/oder der Kondensator/Verdampfereinheit (7) mechanisch und/oder chemisch aufgerauht sind.

25. Gerät der Klimatechnik nach einem der Ansprüche 20 bis 24 folgende, **dadurch gekennzeichnet, daß** das Gerät aus mehreren hintereinander geschalteten Paketen aus Sorptionseinheit (2), Puffervorrichtung (8) und Kondensator/Verdampfereinheit (7) gebildet ist, durch welche ein Luftstrom zwangsgeleitet wird, derart, daß die von dem Kühlluftstrom aufgenommene Abwärme der einen Sorptionseinheit zur Regeneration der folgenden Sorptionseinheit verwendet wird.

26. Gerät der Klimatechnik nach Anspruch 25, **dadurch gekennzeichnet, daß** eine Heizeinrichtung vorgesehen ist, welche zur Erhöhung der Lufttemperatur der zur Regeneration dienenden Luftströmung dient.

## Claims

1. Sorption unit for air conditioning and heat engineering apparatus with metal sheets (3, 3') for heat conduction past which a working medium is directed, wherein the metal sheets are in contact with a sorption means,
**characterised in that**
the sorption means forms strand-like profiled bodies (4) which are configured such that they are in surface contact with the metal sheets (3, 3') and that channels (6) for passing through the working medium are formed by means of the strand-like profiled bodies (4).

2. Sorption unit according to Claim 1, **characterised in that** the working medium is water and the sorption means is a mineral, in particular zeolite.

3. Sorption unit according to Claim 1, **characterised in that** the working medium is water and the sorption means is a salt.

4. Sorption unit according to Claim 1, **characterised in that** the working medium is ammonia and the sorption means is carbon.

5. Sorption unit according to any one of the preceding Claims, **characterised in that** the channels for passing through the working medium are formed in the profiled bodies and extend in the longitudinal direction of the profiled bodies.

6. Sorption unit according to Claim 5, **characterised in that** the channels for passing through the working medium are disposed in an axially symmetrical manner relative to the longitudinal direction of the profiled bodies.

7. Sorption unit according to Claim 6, **characterised in that** the channels for passing through the working medium have a circular cross section.

8. Sorption unit according to Claim 6, **characterised in that** the channels for passing through the working medium have a square cross section.

9. Sorption unit according to Claim 6, **characterised in that** the channels for passing through the working medium have a square cross section with rounded corners.

10. Sorption unit according to any one of Claims 5 to 9, **characterised in that** a respective channel for passing through the working medium is disposed in each profiled body in the centre of the cross section of the body.

11. Sorption unit according to any one of Claims 5 to 10, **characterised in that** the profiled body has a square cross section.

12. Sorption unit according to Claim 5, **characterised in that** the profiled body comprises two, three or more portions which lie side by side, wherein each portion represents a profiled body according to Claim 11.

13. Sorption unit according to Claim 1, **characterised in that** the channels (6) for passing through the working medium are formed between profiled bodies (4) disposed side by side.

14. Sorption unit according to Claim 13, **characterised in that** the profiled bodies (4) are at least largely in the shape of an I.

15. Sorption unit according to Claim 13, **characterised in that** the profiled bodies (4) are at least largely in the shape of an X with closed top and bottom sides.

16. Sorption unit according to any one of the preceding Claims, **characterised in that** the metal sheets (3, 3') are formed as double metal sheet elements, wherein the interspace between the double metal sheets is filled with the strand-like profiled bodies (4).

17. Sorption unit according to any one of the preceding Claims, **characterised in that** the strand-like profiled bodies (4) are of different lengths and disposed parallel to one another.

18. Sorption unit according to either Claim 16 or 17, **characterised in that** a plurality of double metal sheet elements form a pack thereof lying one above the other and/or side by side.

19. Sorption unit according to any one of the preceding Claims, **characterised in that** the ends of the strand-like profiled bodies (4) are formed such that openings are formed between adjacent ends of the profiled bodies (4), through which openings working medium can also flow.

20. Air conditioning apparatus, in particular cooling apparatus or heat pump, **characterised by** a sorption unit (2) according to any one of Claims 1 to 19, comprising a condenser/evaporator unit (7) and a buffer device (8).

21. Air conditioning apparatus according to Claim 20, **characterised in that** embossings (10) are provided in the sheet metal walls in the sorption unit (2) and/or the buffer device (8) and/or the condenser/evaporator unit (7), which embossings, when the apparatus components (2, 7, 8) are stacked, define transverse channels through which an air stream or the like (13) can be produced.

22. Air conditioning apparatus according to Claim 21, **characterised in that** the embossings (10) in each case extend alternately over a part of the width of the sorption unit (2) and/or the buffer device (8) and/or the condenser/evaporator unit (7) and are disposed on both surfaces of the apparatus components.

23. Air conditioning apparatus according to any one of Claims 20 to 22 following, **characterised in that** the pressure in the interior space of the apparatus during operation is lower than the air pressure.

24. Air conditioning apparatus according to any one of Claims 20 to 23 following, **characterised in that** the sheet metal walls (3, 3') on the inside of the buffer device (8) and/or the condenser/evaporator unit (7) are mechanically and/or chemically roughened.

25. Air conditioning apparatus according to any one of Claims 20 to 24 following, **characterised in that** the apparatus is formed from a plurality of series-connected packs of sorption unit (2), buffer device (8) and condenser/evaporator unit (7), through which packs an air stream is positively guided such that the waste heat of one sorption unit which is absorbed by the cooling air stream is used to regenerate the following sorption unit.

26. Air conditioning apparatus according to Claim 25, **characterised in that** a heating device is provided which serves to increase the air temperature of the air stream serving for the regeneration.

## Revendications

1. Unité de sorption pour appareils de climatisation et de chauffage comportant des tôles (3, 3') destinées à la conduction de chaleur, sur lesquels passe un fluide de travail, les tôles étant en contact avec un moyen de sorption
**caractérisée en ce que**
le moyen de sorption forme des corps profilés (4) en forme de boyau qui sont configurés de manière à permettre un contact surfacique avec les tôles (3, 3') et de manière à ce que le corps profilé (4) en forme de boyau crée des canaux (6) destinés au passage du fluide de travail.

2. Unité de sorption selon la revendication 1, **caractérisée en ce que** le fluide de travail est de l'eau et le moyen de sorption un minéral, en particulier de la zéolithe.

3. Unité de sorption selon la revendication 1, **caractérisée en ce que** le fluide de travail est de l'eau et le moyen de sorption un sel.

4. Unité de sorption selon la revendication 1, **caractérisée en ce que** le fluide de travail est de l'ammoniac et le moyen de sorption du carbone.

5. Unité de sorption selon l'une quelconque des revendications précédentes, **caractérisée en ce que** les canaux de passage du fluide de travail sont aménagés dans les corps profilés et sont longitudinaux par rapport aux corps profilés.

6. Unité de sorption selon la revendication 5, **caractérisée en ce que** les canaux de passage du fluide de travail sont disposés en présentant une symétrie axiale par rapport à la direction longitudinale des corps profilés.

7. Unité de sorption selon la revendication 6, **caractérisée en ce que** les canaux de passage du fluide de travail présentent une section circulaire.

8. Unité de sorption selon la revendication 6, **caractérisée en ce que** les canaux de passage du fluide de travail présentent une section carrée.

9. Unité de sorption selon la revendication 6, **caractérisée en ce que** les canaux de passage du fluide de travail présentent une section carrée avec des coins arrondis.

10. Unité de sorption selon l'une quelconque des revendications 5 à 9, **caractérisée en ce que** dans chaque corps profilé il y a un canal de passage du fluide de travail au centre de la section du corps.

11. Unité de sorption selon l'une quelconque des revendications 5 à 10, **caractérisée en ce que** le corps profilé présente une section carrée.

12. Unité de sorption selon la revendication 5, **caractérisée en ce que** le corps profilé comporte deux, trois tronçons disposés côte à côte ou plus, chaque tronçon représentant un corps profilé selon la revendication 11.

13. Unité de sorption selon la revendication 1, **caractérisée en ce que** les canaux (6) de passage du fluide de travail sont formés entre les corps profilés (4) disposés côte à côte.

14. Unité de sorption selon la revendication 13, **caractérisée en ce que** les corps profilés (4) présentent, du moins sur une large étendue, la forme d'un T double.

15. Unité de sorption selon la revendication 13, **caractérisée en ce que** les corps profilés (4) présentent, du moins sur une large étendue, la forme d'un X avec côtés supérieur et inférieur fermés.

16. Unité de sorption selon l'une quelconque des revendications précédentes, **caractérisée en ce que** les tôles (3, 3') sont des éléments en tôles doubles, l'espace entre les tôles doubles étant remplis de corps profilés en forme de boyau (4).

17. Unité de sorption selon l'une quelconque des revendications précédentes, **caractérisée en ce que** les corps profilés (4) en forme de boyau présentent une longueur différente et sont disposés parallèlement l'un à l'autre.

18. Unité de sorption selon la revendication 16 ou illisible, **caractérisée en ce que** plusieurs éléments en tôle doubles forment un paquet superposé et/ou juxtaposé.

19. Unité de sorption selon l'une quelconque des revendications précédentes, **caractérisée en ce que** les extrémités des corps profilés (4) en forme de boyau sont configurées de manière à former, entre les extrémités des corps profilés (4), qui s'écartent, des ouvertures à travers lesquelles du fluide de travail peut également s'écouler.

20. Appareil de conditionnement de l'air, en particulier climatiseur ou pompe à chaleur, **caractérisé par** une unité de sorption (2) selon l'une quelconque des revendications 1 à 19 comprenant un condensateur/évaporateur (7) et un dispositif tampon (8).

21. Appareil de conditionnement de l'air selon la revendication 20, **caractérisé en ce qu**'il est prévu, dans l'unité de sorption (2) et/ou le dispositif tampon (8) et/ou le condensateur/évaporateur (7), dans les parois en tôle, des surélévations (10) qui, lorsque les composants de l'appareil sont superposées (2, 7, 8) délimitent des canaux transversaux permettant de produire un écoulement d'air ou autre (13).

22. Appareil de conditionnement de l'air selon la revendication 21, **caractérisé en ce que** les surélévations (10) s'étendent chacune alternativement sur une partie de la largeur de l'unité de sorption (2) et/ou du dispositif tampon (8) et/ou du condensateur/évaporateur (7) et sont disposées sur les deux faces des composants de l'appareil.

23. Appareil de conditionnement de l'air selon la revendication 20 à 22, **caractérisé en ce que**, à l'intérieur de l'appareil, il y a, pendant le fonctionnement, une pression plus basse que la pression de l'air.

24. Appareil de conditionnement de l'air selon la revendication 20 à 23, **caractérisé en ce que** les parois en tôle (3, 3') sont rendues rugueuses par voie mécanique et/ou chimique, sur le côté intérieur du dispositif tampon (8) et/ou du condensateur/évaporateur (7).

25. Appareil de conditionnement de l'air selon la revendication 20 à 24, **caractérisé en ce que** l'appareil est constitué de plusieurs paquets, connectés l'un derrière l'autre, constitués d'une unité de sorption (2), d'un dispositif tampon (8) et d'un condensateur/évaporateur (7), par lesquels un courant d'air est conduit de manière forcée de telle sorte que la chaleur dissipée, prélevée sur le courant d'air de refroidissement, de l'une des unités de sorption est utilisée pour régénérer l'unité de sorption suivante.

26. Appareil de conditionnement de l'air selon la revendication 25, **caractérisé en ce qu**'un dispositif de chauffage est prévu qui sert à augmenter la température de l'air du courant d'air servant à la régénération.
